# EUROPÄISCHE PATENTANMELDUNG

(11) **EP 4 841 302 A1**
(43) Veröffentlichungstag der Anmeldung: **18.11.2026**
(21) Anmeldenummer: 26171798.7
(22) Anmeldetag: 10.04.2026
(51) Int. Cl.: G01S 13/87, G01S 13/91, G01S 13/935

(54) **SYSTEM, TRANSPONDER UND RADAR ZUR UNTERSTÜTZUNG DER LANDUNG EINES FLUGOBJEKTES**

(30) Priorität: 16.05.2025 DE 102025119170
(71) Anmelder: Fraunhofer-Gesellschaft zur Förderung der angewandten Forschung e.V., 80686 München (DE)
(72) Erfinder: HANSEN, Steffen, 53343 Wachtberg (DE); Wessel, Jan, 53343 Wachtberg (DE); Wallrath, Patrick, 53343 Wachtberg (DE); Briese, Gunnar, 53343 Wachtberg (DE)
(74) Vertreter: 2SPL Patentanwälte PartG mbB

(57) **Zusammenfassung**

Ein System zum Unterstützen der Landung eines Flugobjektes (150; 250), umfasst einen in dem Flugobjekt befindlichen Radarsender (110; 210), der ein erstes Radarsignal in einem ersten Frequenzbereich sendet und zumindest einen in einer Umgebung eines Landeplatzes des Flugobjektes angeordneten Radartransponder (120a -d; 220a-d), der ansprechend auf das erste Radarsignal ein zweites Radarsignal in einem unterschiedlichen zweiten Frequenzbereich sendet. Ein Radarempfänger in dem Flugobjekt (150; 250) empfängt das zweite Radarsignal. Eine Auswerteschaltung bestimmt, basierend auf dem empfangenem zweiten Radarsignal und dem gesendeten ersten Radarsignal einen Abstand zwischen dem Flugobjekt und dem Radartransponder.

## Beschreibung

### Technisches Gebiet

Die vorliegende Offenbarung befasst sich mit einer radarbasierten Lösung zur Unterstützung der Landung eines Flugobjektes.

### Hintergrund

Die vorliegende Offenbarung bezieht sich auf den Bereich der Radartechnologie zur Unterstützung der Landung von Luftfahrzeugen. In der modernen Luftfahrt stellt die präzise Positionsbestimmung während des Landevorgangs, insbesondere unter schlechten Licht- und Wetterbedingungen, eine wichtige Anforderung dar, da herkömmlicheNavigationshilfen häufig unzureichende Ergebnisse für eine automatisierte Landung liefern und zudem die Betriebssicherheit weiter gesteigert werden sollte. Die bisher bekannten Verfahren nutzen überwiegend passive Radarreflektoren oder visuelle Signalisationen, deren Wirksamkeit jedoch erheblich durch ungünstige Umgebungsbedingungen eingeschränkt wird. Insbesondere weisen passive Radarsysteme die Schwierigkeit auf, kleine Reflektoren zuverlässig von anderen Störobjekten im Radarspektrum zu unterscheiden, während der Einsatz größerer Reflektoren mit erheblichen Kosten und logistischen Herausforderungen verbunden ist. Diese Nachteile führen zu einer ungenügenden Genauigkeit und Zuverlässigkeit bei der Ermittlung des Abstands und der Position eines Flugobjektes während der Landung, wodurch das Risiko fehlerhafter Landevorgänge erhöht wird. Daraus resultiert das technische Problem, eine Methode und ein System zu entwickeln, welche eine verlässliche und präzise Bestimmung der Flugzeugposition ermöglichen, unabhängig von widrigen Umgebungsbedingungen und ohne die bekannten Einschränkungen herkömmlicher Verfahren in Kauf nehmen zu müssen.

### Zusammenfassung

Nach einem ersten Aspekt der vorliegenden Offenbarung wird vorgeschlagen ein System zum Unterstützen der Landung eines Flugobjektes, das einen in dem Flugobjekt befindlichen Radarsender umfasst, der ein erstes Radarsignal in einem ersten Frequenzbereich sendet, und das ferner mindestens einen in einer Umgebung eines Landeplatzes des Flugobjektes angeordneten Radartransponder beinhaltet, der ansprechend auf das erste Radarsignal ein zweites Radarsignal in einem unterschiedlichen zweiten Frequenzbereich sendet. Ein in dem Flugobjekt angebrachter Radarempfänger empfängt das zweite Radarsignal und enthält eine Auswerteschaltung, die basierend auf dem empfangenen zweiten Radarsignal und dem gesendeten ersten Radarsignal einen Abstand zwischen dem Flugobjekt und dem Radartransponder bestimmt. Diese Ausgestaltung gewährleistet eine präzise und zuverlässige Bestimmung des Abstands, was zu einer verbesserten Steuerung und Sicherheit des Landevorgangs beiträgt, da anders als bei herkömmlichen Verfahren keine Gefahr besteht, dass das Radarecho des Transponders mit dem Radarecho eines anderen Objektes in der Umgebung des Landeplatzes verwechselt wird.

Nach einigen Ausführungsformen ist der Radartransponder des Systems so ausgebildet, dass er beim Empfangen eines Radarsignals mit einer Empfangsfrequenz ein Radarsignal mit einer Frequenz sendet, die ein ganzzahliges Vielfaches der Empfangsfrequenz ist. Dadurch wird die Erkennbarkeit des Transponders im Radarspektrum erhöht, was die Zuordnung und Messgenauigkeit im Landevorgang verbessert. Gleichzeitig kann die Verwendung eines derartigen harmonischen Radartransponders zu einer geringen Verzögerung zwischen dem Empfang des ersten Radarsignals und dem Senden des zweiten Radarsignals beitragen, was die Genauigkeit der Entfernungsbestimmung und somit der Bestimmung der Position des Flugobjektes relativ zum Radartransponder steigert.

Nach einigen Ausführungsformen ist der Radartransponder ferner so ausgebildet, dass er das zweite Radarsignal moduliert, um eine Information zu übertragen. Diese Modulation ermöglicht die zusätzliche Übermittlung von Daten, wodurch das System mehr Informationen zur Verfügung stellen kann und eine erweiterte Auswertung der Landeparameter ermöglichen könnte.

Nach einigen Ausführungsformen umfasst das System eine Ausgestaltung, bei der die übermittelte Information die Position des Radartransponders beinhaltet. Diese Funktion erlaubt es, nicht nur den Abstand zum Transponder zu messen, sondern basierend auf dessen Position auch die Position des Flugobjektes zu bestimmen (dieses zu orten), was zu einer präziseren Orientierung des Flugobjektes während der Landung führen kann.

Nach einigen Ausführungsformen ist der Radarsender des Systems so ausgebildet, dass er mittels Beamforming (Strahlformung) sequenziell einen Bereich um den Landeplatz ausleuchtet, um einen oder mehr Radartransponder in dem jeweiligen Bereich zu aktivieren. Durch diese fokussierte Ausleuchtung wird die Effizienz der Transponderaktivierung erhöht, was die Signalausbeute und damit die Genauigkeit der Abstandsmessung verbessern kann. Ferner kann vermieden werden, Echos von zu vielen Transpondern gleichzeitig zu erhalten.

Nach einigen Ausführungsformen wird ein Transponder für ein System zur Unterstützung der Landung eines Flugobjektes vorgeschlagen, der einen Empfänger für ein erstes Radarsignal in einem ersten Frequenzbereich, einen bei Empfang des ersten Radarsignals aktivierten Sender für ein zweites Radarsignal in einem unterschiedlichen zweiten Frequenzbereich sowie einen Modulator umfasst, der so ausgebildet ist, dass er das zweite Radarsignal moduliert, um Informationen zu übertragen. Diese Konstruktion ermöglicht dem Transponder, aktiv auf das empfangene Signal zu reagieren und durch die modulierte Signalausgabe zusätzliche Daten bereitzustellen, wodurch die Erfassung und Interpretation der Landedaten verbessert werden kann.

Nach einigen Ausführungsformen umfasst der Transponder eine Ausgestaltung, bei der die übermittelte Information zumindest eine Information aus der Gruppe "Position des Radartransponders" und "Identifikator für den Radartransponder" beinhaltet. Diese Eigenschaft erleichtert die eindeutige Identifizierung des Transponders und unterstützt die präzise Positionsbestimmung im Landevorgang.

Nach einigen Ausführungsformen wird ein Radar zur Unterstützung der Landung eines Flugobjektes vorgeschlagen, das einen Radarsender umfasst, der ein erstes Radarsignal in einem ersten Frequenzbereich sendet, einen Radarempfänger beinhaltet, der ein zweites Radarsignal in einem unterschiedlichen zweiten Frequenzbereich empfängt, eine Auswerteschaltung vorsieht, die basierend auf dem empfangenen zweiten Radarsignal und dem gesendeten ersten Radarsignal einen Abstand zwischen dem Flugobjekt und einem Sender des zweiten Radarsignals bestimmt, sowie einen Demodulator enthält, der so ausgebildet ist, dass er das zweite Radarsignal demoduliert, um Informationen aus diesem zu extrahieren. Diese Auslegung ermöglicht eine umfassende Analyse der empfangenen Signale, wodurch eine präzisere Steuerung des Landevorgangs erzielt wird.

Nach einigen Ausführungsformen umfasst das Radar eine Ausgestaltung, bei der die extrahierten Informationen die Position eines Senders des zweiten Radarsignals beinhalten und die Auswerteschaltung ferner so ausgebildet ist, dass sie basierend auf der Position und dem Abstand eine Position des Radars schätzt. Diese Funktion kann es erlauben, nicht nur den Abstand, sondern auch die genaue Position des Radars zu bestimmen, was die Koordination und Sicherheit während der Landung optimiert.

Nach einigen Ausführungsformen umfasst das Radar eine Ausgestaltung, bei der der zweite Frequenzbereich ein ganzzahliges Vielfaches des ersten Frequenzbereichs ist. Die Verwendung eines derartigen harmonischen Radars kann zu einer geringen Interferenz zwischen dem ersten Radarsignal und dem zweiten Radarsignals beitragen, was die Genauigkeit der Entfernungsbestimmung und somit der Bestimmung der Position des Flugobjektes relativ zum Radartransponder steigert.

Nach einigen Ausführungsformen wird ein Verfahren zur Unterstützung einer Landung eines Flugobjektes vorgeschlagen, das das Senden eines ersten Radarsignals in einem ersten Frequenzbereich von dem Flugobjekt, das Empfangen dieses ersten Radarsignals mit zumindest einem Radartransponder in einer Umgebung eines Landeplatzes, das entsprechende Senden eines zweiten Radarsignals in einem unterschiedlichen zweiten Frequenzbereich durch den zumindest einen Radartransponder als Reaktion auf das erste Signal, das Empfangen des zweiten Radarsignals im Flugobjekt sowie das Bestimmen eines Abstands zwischen dem Flugobjekt und dem zumindest einen Radartransponder basierend auf dem empfangenen zweiten Radarsignal und dem gesendeten ersten Radarsignal umfasst. Dieses Verfahren ermöglicht eine systematische und präzise Ermittlung der Entfernung zwischen Flugobjekt und Transponder, wodurch eine sichere und kontrollierte Landung unterstützt wird.

### Figurenkurzbeschreibung

Einige Beispiele von Vorrichtungen und/oder Verfahren werden nachfolgend bezugnehmend auf die beiliegenden Figuren lediglich beispielhaft näher erläutert. Es zeigen:
Fig. 1 schematisch ein System zum Unterstützen der Landung eines Flugzeugs;
Fig. 2 schematisch ein System zum Unterstützen der Landung eines Hubschraubers oder einer Drohne; und
Fig. 3 ein Flussdiagramm eines Ausführungsbeispiels eines Verfahrens zur Unterstützung einer Landung eines Flugobjektes.

### Beschreibung

Einige Beispiele werden nun ausführlicher in Bezugnahme auf die beiliegenden Figuren beschrieben. Weitere mögliche Beispiele sind jedoch nicht auf die Merkmale dieser detailliert beschriebenen Ausführungsformen beschränkt. Diese können Modifikationen der Merkmale sowie Entsprechungen und Alternativen zu den Merkmalen aufweisen. Ferner soll die Terminologie, die hierin zum Beschreiben bestimmter Beispiele verwendet wird, nicht einschränkend für weitere mögliche Beispiele sein.

Gleiche oder ähnliche Bezugszeichen beziehen sich in der gesamten Beschreibung der Figuren auf gleiche oder ähnliche Elemente beziehungsweise Merkmale, die jeweils identisch oder auch in abgewandelter Form implementiert sein können, während sie die gleiche oder eine ähnliche Funktion bereitstellen. In den Figuren können ferner die Stärken von Linien, Schichten und/oder Bereichen zur Verdeutlichung übertrieben sein.

Wenn zwei Elemente A und B unter Verwendung eines "oder" kombiniert werden, ist dies so zu verstehen, dass alle möglichen Kombinationen offenbart sind, d. h. nur A, nur B sowie A und B, sofern nicht im Einzelfall ausdrücklich anders definiert. Als alternative Formulierung für die gleichen Kombinationen kann "zumindest eines von A und B" oder "A und/oder B" verwendet werden. Das gilt Äquivalent für Kombinationen von mehr als zwei Elementen.

Wenn eine Singularform, z. B. "ein, eine" und "der, die, das" verwendet wird und die Verwendung nur eines einzelnen Elements weder explizit noch implizit als verpflichtend definiert ist, können weitere Beispiele auch mehrere Elemente verwenden, um die gleiche Funktion zu implementieren. Wenn eine Funktion im Folgenden als unter Verwendung mehrerer Elemente implementiert beschrieben ist, können weitere Beispiele die gleiche Funktion unter Verwendung eines einzelnen Elements oder einer einzelnen Verarbeitungsentität implementieren. Es versteht sich weiterhin, dass die Begriffe "umfasst", "umfassend", "aufweist" und/oder "aufweisend" bei deren Gebrauch das Vorhandensein der angegebenen Merkmale, Ganzzahlen, Schritte, Operationen, Prozesse, Elemente, Komponenten und/oder einer Gruppe derselben beschreiben, dabei aber nicht das Vorhandensein oder das Hinzufügen eines oder mehrerer anderer Merkmale, Ganzzahlen, Schritte, Operationen, Prozesse, Elemente, Komponenten und/einer Gruppe derselben ausschließen.

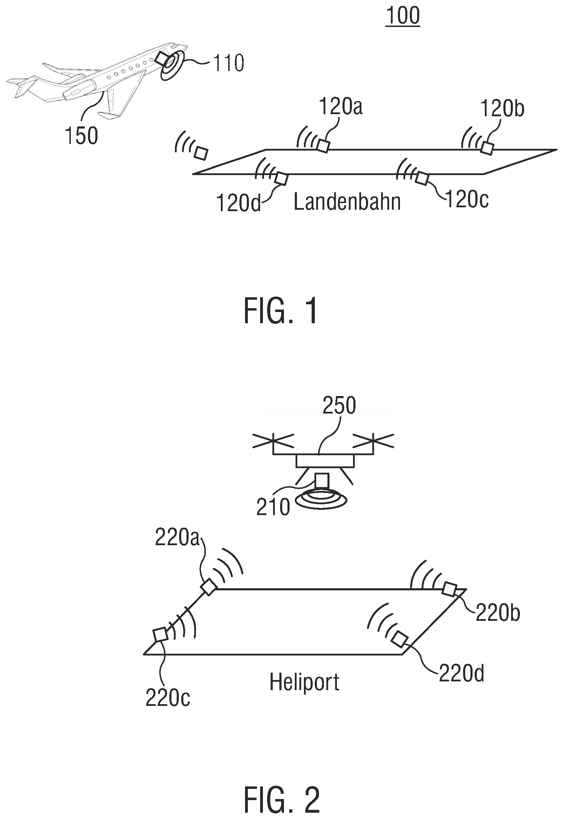

Fig. 1 schematisch ein System 100 zum Unterstützen der Landung eines Flugzeugs 150.

Das Flugobjekt, vorliegend Flugzeugs 150, beinhaltet ein Radar 110, das ein erstes Radarsignal in einem ersten Frequenzbereich aussendet. In der Umgebung einer Landebahn des Flugzeuges 150 sind exemplarisch Radartransponder 120a, 120b, 120c, 120d angeordnet, die als Reaktion auf das erste Radarsignal jeweils ein zweites Radarsignal in einem unterschiedlichen zweiten Frequenzbereich senden. Das Radar 110 im Flugzeug empfängt das zweite Radarsignal. Eine Auswerteschaltung bzw. eine Auswertevorrichtung wird verwendet, um basierend auf dem gesendeten ersten Radarsignal und dem empfangenen zweiten Radarsignal den Abstand zwischen dem Flugzeug 150 und zumindest einem, bevorzugt allen Radartransponders exakt zu bestimmen. Diese Anordnung ermöglicht eine präzise Abstandsermittlung und trägt so wesentlich zur sicheren Landung des Flugobjektes bei. Die Gefahr von Verwechslungen des Echos eines der Radartransponder 120a - 120d mit anderen Objekten ist Aufgrund des Verwendens von zwei unterschiedlichen Radarfrequenzen im Vergleich zu einem System mit herkömmlichen Reflektoren äußerst gering.

Im vorliegenden System zur Unterstützung der Landung eines Flugobjektes können verschiedene Radarimplementierungen sowohl für das Radar als auch für den Transponder zum Einsatz kommen. Eine mögliche Methode ist das Puls-Echo-Radar. Bei dieser Implementierung wird ein kurzer, hochenergetischer Radarpuls ausgesendet, der in Form eines ersten Radarsignals im definierten ersten Frequenzbereich vom Flugobjekt gesendet wird. Nachdem der Impuls auf den Radartransponder trifft, wird ein Echo in Form eines zweiten Radarsignals in einem unterschiedlichen zweiten Frequenzbereich zurückgesendet. Die Zeitdifferenz zwischen dem ausgesendeten Impuls und dem Eintreffen des Echos wird gemessen, um den Abstand zwischen dem Flugobjekt und dem Radartransponder exakt zu bestimmen.

Eine alternative Implementierung ist das FMCW-Radar (Frequency Modulated Continuous Wave-Radar). Bei dieser Technik wird statt einzelner Impulse ein kontinuierliches Signal ausgesendet, dessen Frequenz in der Regel linear moduliert wird, wobei auch weitere Modulationsformen möglich sind. Das kontinuierlich modulierte erste Radarsignal, das vom Flugobjekt gesendet wird, wird nach Reflexion an einem Radartransponder als zweites Radarsignal empfangen. Durch den Vergleich der Frequenzdifferenz zwischen dem ausgesendeten und dem empfangenen Signal kann die Verzögerungszeit - und damit der Abstand - präzise berechnet werden. Diese Methode ermöglicht eine hohe Entfernungsauflösung und kann auch bei geringeren Spitzenleistungen betrieben werden. Aufgrund der kontinuierlichen Signalübertragung liefert das FMCW-Radar eine gleichmäßige und stabile Abstandsmessung.

Gemäß der vorliegenden Offenbarung kann der Transponder in unterschiedlichen Ausführungsformen betrieben werden, wobei sowohl rein passive als auch aktive Betriebsweisen möglich sind. In einer passiven Implementierung empfängt der Transponder das erste Radarsignal und reflektiert es, wobei er beispielsweise durch nichtlineare Elemente ein Signal in einem ganzzahligen Vielfachen der Empfangsfrequenz erzeugt, ohne dass hierfür eine externe Energiezufuhr oder eine zusätzliche Signalverstärkung erforderlich ist. Diese Ausführungsform ermöglicht eine einfache und kosteneffiziente Lösung. In einer aktiven Implementierung hingegen ist der Transponder mit einer eigenen Energiequelle, einem aktiven Sender und optional auch mit einem Modulator ausgestattet. Nach dem Empfang des ersten Radarsignals wird das Signal aktiv verstärkt und verarbeitet, anschließend erfolgt die Aussendung eines zweiten Radarsignals in einem unterschiedlichen Frequenzbereich, wobei durch die Modulation des Signals zusätzliche Informationen, wie beispielsweise die Position oder ein Identifikator des Transponders, optional übertragen werden können. Diese aktive Betriebsweise kann zu einer verbesserten Signalqualität und einer erweiterten Funktionalität führen.

Die beiden Frequenzen, also die des ausgesendeten ersten Radarsignals und die des vom Transponder zurückgesendeten zweiten Radarsignals, können grundsätzlich beliebig gewählt werden. Dies erlaubt eine flexible Systemkonfiguration, bei der die Frequenzbereiche unabhängig voneinander definiert werden können, um unterschiedlichen betrieblichen Anforderungen und Umgebungsbedingungen gerecht zu werden. In einer speziellen Ausführungsform wird jedoch ein harmonischer Transponder eingesetzt, bei dem das zweite Radarsignal in einem ganzzahligen Vielfachen der Empfangsfrequenz ausgesendet wird. Diese harmonische Beziehung ermöglicht eine klare Abgrenzung des zurückgesendeten Signals von anderen möglichen Reflexionen im Radarspektrum und trägt somit zu einer präzisen Distanzmessung bei. Darüber kann ein harmonischer Transponder in einigen Implementierungen günstig hergestellt werden, da er auf einfachen nichtlinearen Bauelementen basieren kann, die ohne zusätzliche aktive Verstärkungs- oder Signalverarbeitungskomponenten auskommen.

Eine optionale Modulation des zweiten Radarsignals bietet zusätzlichen Nutzen, das neben der reinen Abstandsmessung zusätzliche Informationen übermittelt werden können, was die Funktionalität und Flexibilität des Gesamtsystems verbessert. Durch die Modulation kann das zweite Radarsignal, das als Reaktion auf das erste Radarsignal ausgesendet wird, um zusätzliche Daten ergänzt werden, die vom Empfänger interpretiert werden können. Dies lässt sich beispielsweise durch Techniken wie Amplitudenmodulation, Phasenmodulation oder Frequenzmodulation oder eine Kombination dieser Verfahren realisieren. Dabei wird ein Informationssignal in das Trägersignal eingebettet, sodass dessen Eigenschaften (z. B. Amplitude, Phase, Frequenz) variabel verändert werden können, um die gewünschten Informationen zu codieren. Der Empfänger kann diese Veränderungen analysieren und so nicht nur den Abstand, sondern auch zusätzliche Systemparameter ermitteln.

Beispielsweise kann als Information die Position des Transponders übermittelt werden. Die Übermittlung der exakten Position des Transponders ermöglicht es dem Flugobjekt, nicht nur den Abstand, sondern auch den präzisen Standort des Transponders und damit den Standort von sich selbst zu ermitteln. Dies verbessert die Navigation und unterstützt eine genauere Steuerung des Landevorgangs. Die kann erfolgen, ohne dass dem Flugobjekt - beispielsweise mittels einer Datenbank - die Position des Transponders a priori bekannt wäre.

Die Übertragung eines eindeutigen Identifikators für den Transponder hilft dabei, den jeweiligen Transponder zu unterscheiden und zuzuordnen. Dies kann insbesondere in Umgebungen mit mehreren Transpondern wichtig sein, um Interferenzen zu vermeiden und die Systemintegrität sicherzustellen.

Durch die Übertragung von Betriebs- oder Diagnosedaten des Transponders kann der Systemzustand überwacht werden. Diese Informationen ermöglichen eine frühzeitige Erkennung von Störungen oder Ausfällen, was die Zuverlässigkeit und Wartungsfreundlichkeit des Systems erhöht.

Die Einbindung von Zeitstempeln oder Synchronisationsdaten unterstützt die präzise Zeitmessung zwischen dem ausgesendeten und dem empfangenen Signal. Dies trägt zu einer exakteren Bestimmung des Abstands bei und hilft, eventuelle Verzögerungen im System zu kompensieren.

Die Übertragung von sicherheitsrelevanten Informationen, wie beispielsweise Authentifizierungscodes, kann sicherstellen, dass nur autorisierte Transponder in das System integriert sind. Dies erhöht die Sicherheit und verhindert unbefugte Eingriffe oder Störungen in der Kommunikation.

Durch die modulare Einbettung dieser Informationen in das zweite Radarsignal kann das System nicht nur in seiner Messgenauigkeit, sondern auch in seiner Funktionalität erweitert werden, was zu einer optimierten und sichereren Unterstützung des Landevorgangs führt.

Zusammengefasst beinhaltet das System einen oder mehrere Transponder (120a -d) am Landebereich und ein Radar 110 im Flugobjekt. Der Transponder umfasst einen Empfänger für das erstes Radarsignal in dem ersten Frequenzbereich sowie einen bei dem Empfang des ersten Radarsignals aktivierten Sender für ein zweites Radarsignal in einem unterschiedlichen zweiten Frequenzbereich. In einigen Ausführungsbeispielen umfasst der Sender ferner einen Modulator, der ausgebildet ist, um das zweite Radarsignal zu modulieren, um Informationen zu übertragen.

Beim Empfang des ersten Radarsignals kann der Transponder den Sender für das zweite Radarsignal auf verschiedene Weise aktivieren. Eine Möglichkeit besteht in einer rein passiven Reaktion, bei der das empfangene Signal direkt über ein nichtlineares Element - wie zum Beispiel Dioden - zu einer Steuerspannung umgewandelt wird. Diese bewirkt, dass die Frequenzumsetzende Schaltung aktiviert wird und das Radarsignal anschließend automatisch in einem harmonischen Vielfachen der ursprünglichen Frequenz reflektiert wird.

Eine weitere Option ist die Aktivierung mittels analoger Schaltungen. Hierbei wird das erste Radarsignal zunächst durch einen Detektor erkannt, der bei Überschreiten eines definierten Schwellenwerts einen Schaltimpuls erzeugt. Dieser Impuls steuert anschließend einen Verstärker oder eine Senderschaltung an, die das zweite Radarsignal erzeugt und dabei auch eine Modulation zur Übertragung zusätzlicher Informationen ermöglicht. Die analoge Signalverarbeitung kann in diesem Fall eine schnelle Reaktionszeit und eine zuverlässige Aktivierung gewährleisten.

Zusätzlich kann eine digital gesteuerte Methode zur Anwendung kommen. In solchen Systemen wird das empfangene Radarsignal zunächst durch einen Analog-Digital-Wandler in digitale Signale umgewandelt, die dann von einem Mikrocontroller oder einem digitalen Signalprozessor ausgewertet werden. Wird eine vordefinierte Bedingung - beispielsweise eine bestimmte Signalstärke, Sequenz oder Frequenz -festgestellt, gibt die digitale Schaltung einen Steuerimpuls aus, der den Sender aktiv schaltet. Dieser Ansatz ermöglicht eine flexible und präzise Steuerung der Aktivierung, da komplexe Algorithmen zur Signalverarbeitung implementiert werden können.

Schließlich ist auch ein hybrider Ansatz denkbar, bei dem analoge und digitale Verfahren kombiniert werden. In diesem Fall kann das empfangene erste Radarsignal sowohl direkt über nichtlineare Elemente reflektiert als auch gleichzeitig durch eine aktive Verstärkerschaltung weiterverarbeitet werden. Ein solches System könnte den Vorteil bieten, dass es einerseits auf die Einfachheit und Zuverlässigkeit passiver Elemente zurückgreift und andererseits die Möglichkeiten der aktiven Signalmodulation und -verarbeitung nutzt, um beispielsweise zusätzliche Informationen zu übertragen.

Das Radar 110 umfasst einen Radarsender, der das erste Radarsignal in dem ersten Frequenzbereich sendet und einen Radarempfänger, der das zweites Radarsignal in einem unterschiedlichen zweiten Frequenzbereich empfängt. Eine Auswerteschaltung bestimmt basierend auf dem empfangenem zweiten Radarsignal und dem gesendeten ersten Radarsignal einen Abstand zwischen dem Flugobjekt und dem Sender bzw. der Quelle des zweiten Radarsignals. Ein optionaler Demodulator im Radar ist ausgebildet, um das zweite Radarsignal zu demodulieren, um Informationen aus dem zweiten Radarsignal zu extrahieren.

In alternativen Systemen kann die Position des Radars und des Radartransponders auch vertauscht sein.

Fig. 2 zeigt schematisch ein System zum Unterstützen der Landung eines Hubschraubers oder einer Drohne (mit 250 gekennzeichnet). Hier wird der Radarsender durch die Referenznummer 210 dargestellt, der ebenfalls ein erstes Radarsignal in einem ersten Frequenzbereich aussendet. In diesem Szenario sind die Radartransponder in der Umgebung des Landeplatzes durch die Referenznummern 220a, 220b, 220c und 220d gekennzeichnet. Diese Transponder empfangen das erste Radarsignal und senden daraufhin ein zweites Radarsignal in einem unterschiedlichen zweiten Frequenzbereich. Im Flugobjekt befindet sich auch ein Radarempfänger, der das zweite Radarsignal empfängt, während eine Auswerteschaltung zur Bestimmung des Abstands zwischen dem Flugobjekt und dem aktiven Radartransponder beiträgt. Diese Darstellung verdeutlicht, wie unterschiedliche Ausführungsvarianten hinsichtlich der Bauteilkennzeichnungen innerhalb des Gesamtsystems umgesetzt werden können. Da es sich bei einem senkrecht landenden Luftfahrzeug um einen anderen Anwendungsfall handelt als bei einem Flugzeug, mit ansonsten aber ähnlichen Anforderungen, gelten die anhand von Fig. 1 bereits diskutierten Anforderungen und möglichen Ausgestaltungen äquivalent. Zur Vermeidung von Wiederholungen wird daher auf die Ausführungen zu Fig. 1 verweisen.

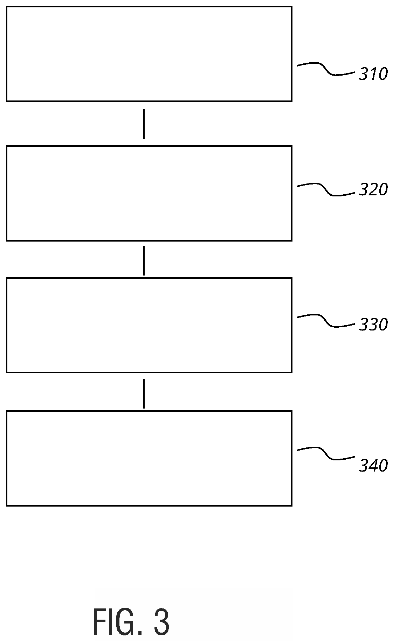

Fig. 3 zeigt ein einfaches Flussdiagramm eines Ausführungsbeispiels eines Verfahrens 300 zur Unterstützung einer Landung eines Flugobjektes.

Wie bereits anhand der Figuren 1 und 2 beschrieben, umfasst das Verfahren das Senden 310 eines ersten Radarsignals in einem ersten Frequenzbereich vom Flugobjekt und das Empfangen 320 dieses Signals durch einen in der Umgebung des Landeplatzes positionierten Radartransponder (wie anhand Figur 1 beschrieben, kann die Anbringung von Radar und Radartransponder vertauscht sein). Das Verfahren umfasst ferner das Senden 330 eines zweiten Radarsignals in einem unterschiedlichen zweiten Frequenzbereich durch den Radartransponder als Reaktion auf das erste Signal. Der Abstand zwischen dem Flugobjekt und dem Radartransponder wird bestimmt 340, indem die Signale das erste Radarsignal und das zweite Radarsignal kombiniert werden.

Die Aspekte und Merkmale, die im Zusammenhang mit einem bestimmten der vorherigen Beispiele beschrieben sind, können auch mit einem oder mehreren der weiteren Beispiele kombiniert werden, um ein identisches oder ähnliches Merkmal dieses weiteren Beispiels zu ersetzen oder um das Merkmal in das weitere Beispiel zusätzlich einzuführen.

Beispiele können weiterhin ein (Computer-)Programm mit einem Programmcode zum Ausführen eines oder mehrerer der obigen Verfahrensschritte der Auswerteschaltung sein oder sich darauf beziehen, wenn das Programm auf einem Computer, einem Prozessor oder einer sonstigen programmierbaren Hardwarekomponente ausgeführt wird. Schritte, Operationen oder Prozesse von einigen der oben beschriebenen Verfahrensschritte können also auch durch programmierte Computer, Prozessoren oder sonstige programmierbare Hardwarekomponenten ausgeführt werden. Beispiele können auch Programmspeichervorrichtungen, z.B. Digitaldatenspeichermedien, abdecken, die maschinen-, prozessor- oder computerlesbar sind und maschinenausführbare, prozessorausführbare oder computerausführbare Programme und Anweisungen codieren beziehungsweise enthalten. Die Programmspeichervorrichtungen können z.B. Digitalspeicher, magnetische Speichermedien wie beispielsweise Magnetplatten und Magnetbänder, Festplattenlaufwerke oder optisch lesbare Digitaldatenspeichermedien umfassen oder sein. Weitere Beispiele können auch Computer, Prozessoren, Steuereinheiten, feld-programmierbare Logik-Arrays ((F)PLAs = (Field) Programmable Logic Arrays), feld-programmierbare Gate-Arrays ((F)PGA = (Field) Programmable Gate Arrays), Grafikprozessoren (GPU = Graphics Processor Unit), anwendungsspezifische integrierte Schaltungen (ASIC = application-specific integrated circuit), integrierte Schaltungen (IC= Integrated Circuit) oder Ein-Chip-Systeme (SoC = System-on-a-Chip) abdecken, die zum Ausführen der Schritte der oben beschriebenen Verfahren programmiert sind.

Es versteht sich ferner, dass die Offenbarung mehrerer, in der Beschreibung oder den Ansprüchen offenbarter Schritte, Prozesse, Operationen oder Funktionen nicht als zwingend in der beschriebenen Reihenfolge befindlich ausgelegt werden soll, sofern dies nicht im Einzelfall explizit angegeben oder aus technischen Gründen zwingend erforderlich ist. Daher wird durch die vorhergehende Beschreibung die Durchführung von mehreren Schritten oder Funktionen nicht auf eine bestimmte Reihenfolge begrenzt. Ferner kann bei weiteren Beispielen ein einzelner Schritt, eine einzelne Funktion, ein einzelner Prozess oder eine einzelne Operation mehrere Teilschritte, -funktionen, -prozesse oder -operationen einschließen und/oder in dieselben aufgebrochen werden.

Wenn einige Aspekte in den vorhergehenden Abschnitten im Zusammenhang mit einer Vorrichtung oder einem System beschrieben wurden, sind diese Aspekte auch als eine Beschreibung des entsprechenden Verfahrens zu verstehen. Dabei kann beispielsweise ein Block, eine Vorrichtung oder ein funktionaler Aspekt der Vorrichtung oder des Systems einem Merkmal, etwa einem Verfahrensschritt, des entsprechenden Verfahrens entsprechen. Entsprechend dazu sind Aspekte, die im Zusammenhang mit einem Verfahren beschrieben werden, auch als eine Beschreibung eines entsprechenden Blocks, eines entsprechenden Elements, einer Eigenschaft oder eines funktionalen Merkmals einer entsprechenden Vorrichtung oder eines entsprechenden Systems zu verstehen.

Die folgenden Ansprüche werden hiermit in die detaillierte Beschreibung aufgenommen, wobei jeder Anspruch als getrenntes Beispiel für sich stehen kann. Ferner ist zu beachten, dass - obwohl ein abhängiger Anspruch sich in den Ansprüchen auf eine bestimmte Kombination mit einem oder mehreren anderen Ansprüchen bezieht - andere Beispiele auch eine Kombination des abhängigen Anspruchs mit dem Gegenstand jedes anderen abhängigen oder unabhängigen Anspruchs umfassen können. Solche Kombinationen werden hiermit explizit vorgeschlagen, sofern nicht im Einzelfall angegeben ist, dass eine bestimmte Kombination nicht beabsichtigt ist. Ferner sollen auch Merkmale eines Anspruchs für jeden anderen unabhängigen Anspruch eingeschlossen sein, selbst wenn dieser Anspruch nicht direkt als abhängig von diesem anderen unabhängigen Anspruch definiert ist.

## Patentansprüche

1. System zum Unterstützen der Landung eines Flugobjektes (150; 250), umfassend:
einen in dem Flugobjekt befindlichen Radarsender (110; 210), der ein erstes Radarsignal in einem ersten Frequenzbereich sendet;
zumindest einen in einer Umgebung eines Landeplatzes des Flugobjektes angeordneten Radartransponder (120a -d; 220a-d), der ansprechend auf das erste Radarsignal ein zweites Radarsignal in einem unterschiedlichen zweiten Frequenzbereich sendet;
einen Radarempfänger in dem Flugobjekt (150; 250), der das zweite Radarsignal empfängt; und
eine Auswertevorrichtung, die basierend auf dem empfangenem zweiten Radarsignal und dem gesendeten ersten Radarsignal einen Abstand zwischen dem Flugobjekt und dem Radartransponder bestimmt.

2. Das System gemäß Anspruch 1, wobei der Radartransponder (120a -d; 220a-d) ausgebildet ist, um beim Empfangen eines Radarsignals mit einer Empfangsfrequenz ein Radarsignal mit einer Frequenz zu senden, die ein ganzzahliges Vielfaches der Empfangsfrequenz ist.

3. Das System gemäß Anspruch 1 oder 2, wobei der Radartransponder (120a -d; 220a-d) ferner ausgebildet ist, um das zweite Radarsignal zu modulieren, um eine Information zu übertragen.

4. Das System gemäß Anspruch 3, wobei die Information die Position des Radartransponders (120a -d; 220a-d) umfasst.

5. Das System gemäß einem der vorhergehenden Ansprüche, wobei der Radarsender ausgebildet (110; 220) ist, mittels Strahlformung sequentiell einen Bereich um den Landeplatz auszuleuchten, um den zumindest einen Radartransponder (120a -d; 220a-d) zu aktivieren.

6. Ein Transponder (120a -d; 220a-d) für ein System zur Unterstützung der Landung eines Flugobjektes, umfassend:
einen Empfänger für ein erstes Radarsignal in einem ersten Frequenzbereich;
einen bei dem Empfang des ersten Radarsignals aktivierten Sender für ein zweites Radarsignal in einem unterschiedlichen zweiten Frequenzbereich; und optional
einen Modulator, der ausgebildet ist, um das zweite Radarsignal zu modulieren, um Informationen zu übertragen.

7. Der Transponder (120a -d; 220a-d) gemäß Patentanspruch 6, wobei die Information zumindest eine Information aus der Gruppe Position des Transponders und Identifikator für den Transponder umfasst.

8. Ein Radar (110; 210) zur Unterstützung der Landung eines Flugobjektes, umfassend:
einen Radarsender, der ein erstes Radarsignal in einem ersten Frequenzbereich sendet;
einen Radarempfänger, der ein zweites Radarsignal in einem unterschiedlichen zweiten Frequenzbereich empfängt;
eine Auswertevorrichtung, die basierend auf dem empfangenem zweiten Radarsignal und dem gesendeten ersten Radarsignal einen Abstand zwischen dem Flugobjekt und einem Sender des zweiten Radarsignals bestimmt; und
einen Demodulator, der ausgebildet ist, um das zweite Radarsignal zu demodulieren, um Informationen aus dem zweiten Radarsignal zu extrahieren.

9. Das Radar (110; 210) gemäß Anspruch 8, wobei die Informationen die Position eines Senders des zweiten Radarsignals umfassen, und wobei
die Auswerteschaltung ferner ausgebildet ist, basierend auf der Position und dem Abstand eine Position des Radars zu schätzen.

10. Das Radar (110; 210) gemäß einem der Ansprüche 8 oder 9, wobei der zweite Frequenzbereich ein ganzzahliges Vielfaches des ersten Frequenzbereichs ist.

11. System zum Unterstützen der Landung eines Flugobjektes, umfassend:
zumindest einen in einer Umgebung eines Landeplatzes des Flugobjektes angeordneten Radarsender, der ein erstes Radarsignal in einem ersten Frequenzbereich sendet;
einen in dem Flugobjekt befindlichen Radartransponder, der ansprechend auf das erste Radarsignal ein zweites Radarsignal in einem unterschiedlichen zweiten Frequenzbereich sendet;
einen Radarempfänger in der Umgebung des Landeplatzes, der das zweite Radarsignal empfängt; und
eine Auswerteschaltung, die basierend auf dem empfangenem zweiten Radarsignal und dem gesendeten ersten Radarsignal einen Abstand zwischen dem Flugobjekt und dem Radartransponder bestimmt.

12. Verfahren zum Unterstützen einer Landung eines Flugobjektes, umfassend:
senden (310) eines erstes Radarsignal in einem ersten Frequenzbereich des Flugobjekts;
empfangen (320) des erstes Radarsignals mit einem Radartransponders in einer Umgebung eines Landeplatzes des Flugobjektes;
ansprechend auf das erste Radarsignal, senden (330) eines zweites Radarsignals in einem unterschiedlichen zweiten Frequenzbereich mit dem Radartransponder;
empfangen des zweiten Radarsignals in dem Flugobjekt; und
Bestimmen (340) eines Abstands zwischen dem Flugobjekt und dem Radartransponder basierend auf dem empfangenem zweiten Radarsignal und dem gesendeten ersten Radarsignal.
